(19) Europäisches Patentamt
European Patent Office
Office européen des brevets

(11) Numéro de publication: 0 275 755 B1

# (12) FASCICULE DE BREVET EUROPEEN

(45) Date de publication du fascicule du brevet: **07.11.90**

(51) Int. Cl.⁵: **B29D 7/01**, B32B 17/10, C08J 5/18

(21) Numéro de dépôt: **87402863.2**

(22) Date de dépôt: **15.12.87**

(54) **Feuille en matière plastique transparente de haute qualité optique résistant à la rayure et à la l'abrasion, procédé de fabrication et vitrages qui l'utilisent.**

(30) Priorité: **19.12.86 FR 8617804**

(43) Date de publication de la demande: **27.07.88 Bulletin 88/30**

(45) Mention de la délivrance du brevet: **07.11.90 Bulletin 90/45**

(84) Etats contractants désignés: **AT BE CH DE ES FR GB IT LI LU NL SE**

(56) Documents cités:
**EP-A- 0 144 065**
**EP-A- 0 190 700**
**US-A- 3 810 815**
**US-A- 4 177 099**

(73) Titulaire: **SAINT-GOBAIN VITRAGE INTERNATIONAL, 18, avenue d'Alsace, F-92400 Courbevoie(FR)**

(72) Inventeur: **Orain, Roger, 2, La Lisière du Golf, F-92380 Garches(FR)**
Inventeur: **Bravet, Jean-Louis, 5, Avenue du Moulin, F-60150 Thourotte(FR)**
Inventeur: **Dimier, Gérard, 53 Avenue Georges Clémenceau, F-33405 Talence(FR)**
Inventeur: **Daude, Gérard, 11 Rue René Voisin, F-33140 Villenave D'Ornon(FR)**
Inventeur: **Dagaut, Philippe, Résidence Sarcignan Bat. A 14 D, F-33140 Villenave D'Ornon(FR)**

(74) Mandataire: **Muller, René et al, SAINT-GOBAIN RECHERCHE 39, quai Lucien Lefranc, F-93304 Aubervilliers(FR)**

EP 0 275 755 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne une feuille en matière plastique transparente de haute qualité optique comprenant au moins une couche à base d'un polyuréthane présentant des propriétés d'absorbeur d'énergie, qui peut être utilisée seule ou en association avec d'autres matériaux et notamment dans les vitrages feuilletés où elle est associée à un support monolithique ou feuilleté en verre et/ou en matière plastique, par exemple des pare-brise de véhicule.

On connait d'aprés la publication de brevet européen 0 133 090 une feuille transparente de haute qualité optique apte à être utilisée seule ou en association avec d'autres matériaux et notamment dans la fabrication des vitrages feuilletés décrits précédemment. Cette feuille comprend une couche formée dans un processus en continu par coulée réactive, sur un support plan horizontal duquel elle est détachable, d'un mélange réactionnel des composants d'un polyuréthane. Par coulée réactive on entend la coulée sous forme d'une couche ou d'un film d'un mélange liquide des composants à l'état de monomères ou de prépolymères, suivie d'une polymérisation de ce mélange par la chaleur.

Le mélange réactionnel décrit dans le document cité comprend un composant à hydrogènes actifs notamment un composant polyol, et un composant isocyanate comprenant au moins un diisocyanate aliphatique, cycloaliphatique ou un prépolymère de diisocyanate, ce composant ayant une viscosité inférieure à environ 5000 centipoises, à + 40°C. Le composant polyol comprend au moins un polyol long difonctionnel de masse moléculaire comprise entre 500 et 4000,au moins un diol court en tant qu'agent d'allongement de chaine et le cas échéant une faible proportion d'au moins un polyol de fonctionalité supérieure à deux et notamment des triols aliphatiques.

Les proportions entre le polyol long, le diol court et éventuellement le polyol de fonctionnalité supérieure à 2 sont généralement choisies telles que pour un équivalent hydroxyle, le polyol long représente environ de 0,30 à 0,45 équivalent, le diol court d'environ 0,2 à 0,7 équivalent et le polyol de fonctionnalité supérieure à 2 environ 0 à 0,35 équivalent. Dans ces conditions, la couche présente les caractéristiques mécaniques suivantes, mesurées suivant les normes AFNOR/NFT 46 002, 51 034, 54 108.

- une contrainte au seuil d'écoulement $\sigma_y$ à - 20°C inférieure ou égale à 3 daN/mm$^2$ ,
- une contrainte à la rupture $\sigma_R$ à + 40°C supérieure ou égale à 2 daN/mm$^2$,
- un allongement à la rupture $\varepsilon_R$ à + 20°C compris entre 250 et 500 %,
- une résistance à la déchirure amorcée Ra à + 20°C supérieure ou égale à 9 daN/mm d'épaisseur.

Cette couche présente outre des propriétés d'absorbeur d'énergie, comme indiqués précédemment, des propriétés de résistance à la rayure et à l'abrasion la rendant apte à être utilisée comme couche externe dans certaines conditions. Ainsi, elle présente une résistance à la rayure supérieure à 20 grammes et une résistance à l'abrasion avec un écart de flou inférieur à 4 %, ces valeurs étant mesurées d'après les tests décrits dans la publication citée.

Cependant dans des conditions d'utilisations sévères, par exemple lorsqu'elle est utilisée en tant que couche externe dans les vitrages de véhicule à moteur, et qu'elle est alors soumise à toutes sortes d'attaques et en particulier à l'attaque de certains produits de nettoyage contenant des solvants organiques agressifs, elle ne donne alors pas entière satisfaction, sa résistance à ces produits n'étant pas suffisante.

Une solution proposée pour améliorer la résistance de la couche, aux solvants notamment, est de munir cette couche d'une couche de revêtement en un polyuréthane thermodurcissable ayant un module d'élasticité d'environ 25 à 200 daN/cm$^2$ et un allongement d'environ 100 à 200 % avec moins de 1 % de déformation plastique.

Une autre solution, proposée dans la publication du brevet européen 0 190 700 consiste à "reformer" la face externe d'une couche de polyuréthane déjà formée, par imprégnation de la face de la couche de polyuréthane par un composé insaturé, polymérisable, puis de polymériser ce composé à la surface de la couche de polyuréthane. Ce procédé est cependant délicat à mettre en oeuvre car la couche superficielle formée après polymérisation du composé insaturé ne doit pas dépasser 1 micromètre d'épaisseur pour ne pas détruire les propriétés d'autocicatrisation de la couche de polyuréthane. On est ainsi amené à utiliser des séquences de trempage très précises pour obtenir l'épaisseur désirée. En outre, ce procédé est long car il nécessite un cycle pour la polymérisation de la couche de polyuréthane et un cycle supplémentaire pour la polymérisation de la couche superficielle acrylique.

L'invention propose une feuille de matière plastique comprenant une couche de polyuréthane ayant des propriétés d'absorbeur d'énergie qui présente les propriétés requises pour pouvoir être utilisée notamment en tant que couche externe dans les vitrages de sécurité, tout en étant fabriquée par un procédé simplifié.

La couche de polyuréthane selon l'invention est formée par un dépôt sur un support plan horizontal, par coulée réactive ou pulvérisation réactive, d'un mélange réactionnel comprenant un composant polyol et un composant isocyanate comme décrit précédemment, et elle se caractérise en ce qu'elle comprend sur sa face qui était orientée vers le support, lors de la formation de la couche, un polymère acrylique résultant de la mise en contact, au cours du dépôt du mélange réactionnel, de ce mélange réactionnel avec une couche mince acrylique déposée au préalable sur le support.

La couche de polyuréthane selon l'invention présente donc superficiellement une structure interpénétrée de polyuréthane, de polymère acrylique.

On n'observe pas véritablement une couche superficielle de recouvrement du polymère acrylique, ou alors cette couche, si elle existe, est très fine et au maximum de quelques micromètres d'épaisseur.

Le procédé de fabrication de la feuille selon l'invention consiste à former sur le support plan horizontal que l'on revêt au préalable d'un agent de séparation, un mince revêtement à base de monomères, ou prépolymères acryliques, ou de polymères acryliques porteurs de groupes hydroxyles libres, puis à déposer sur ledit revêtement le mélange réactionnel des composants, apte à former la couche de polyuréthane, à faire subir à l'ensemble un cycle de polymérisation durant lequel s'effectue la polymérisation des acryliques ainsi que polymérisation de la couche de polyuréthane, en présence d'un amorceur de polymérisation des acryliques par voie thermique, puis à retirer du support la couche de polyuréthane associée superficiellement au polymère acrylique.

Les monomères et/ou prépolymères utilisés pour former la couche mince de revêtement sur le support de coulée sont choisis notamment parmi les acrylates et méthacrylates, les polyacrylates et polyméthacrylates de faible poids moléculaire, par exemple le méthacrylate d'isobutyle, le diacrylate de dipropylèneglycol, le diacrylate de triéthylèneglycol, le diacrylate d'hexanediol-1,6, le diacrylate de butanediol-1,4, ...

Lorsque le revêtement est formé à partir de polymères acryliques porteurs de groupes hydroxyles libres, on choisit notamment des résines méthacryliques telles du méthacrylate à indice d'hydroxyle inférieur à 100.

Lorsqu'on utilise des résines méthacryliques à indice d'hydroxyle supérieur à 100, on obtient des surfaces dures, résistantes chimiquement, mais rayables. L'indice d'hydroxyle est la quantité de potasse en mg, nécessaire à la neutralisation des hydroxyles libres de 1 g de substance.

L'amorceur de polymérisation des acryliques par voie thermique est par exemple le peroxyde de benzoyle, les perbenzoates d'alkyle, l'ozo-bis-isobutyronitrile ou d'autres amorceurs connus. On l'utilise à raison d'environ 0,5 à 5 % en poids du composé acrylique.

La couche mince ou pellicule de revêtement est avantageusement formée sur le support plan horizontal par dépôt d'une solution des monomères et/ou prépolymères acryliques, ou des polymères acryliques porteurs de groupes hydroxyles libres, suivi d'une évaporation des sol vants.

Les solvants convenables sont par exemple des hydrocarbures simples, des hydrocarbures halogénés, des cétones...

La couche de polyuréthane que l'on forme sur le revêtement acrylique selon l'invention a été décrite précédemment sous sa forme générale. Les proportions des composants du polyuréthane formant la couche sont choisies pour obtenir de préférence un système stoechiométriquement équilibré, c'est-à-dire que le rapport des groupements équivalents NCO apportés par le composant diisocyanate aux groupements équivalents OH apportés par le composant polyol est de l'ordre de 1.

Les diisocyanates convenables utilisés dans le cadre de l'invention sont choisis notamment parmi les isocyanates difonctionnels aliphatiques suivants : hexaméthylènediisocyanate (HMDI), 2,2,4-triméthyl1,6-hexanediisocyanate (TMDI), bis 4-isocyanatocyclohexylméthane (Hylène W), bis 3-méthyl-4-isocyanatocyclohexylméthane, 2,2 bis (4-isocyanatocyclohexyl) propane, 3-isocyanatométhyl-3,5,5 triméthylcyclohexylisocyanate (IPDI), m-xylylènediisocyanate (XDI), m-et p-tétraméthylxylylènediisocyanate (m- et p- TMXDI), cis et transcyclohexane-1,4 diisocyanate (CHDI), 1,3 -(diisocyanatométhyl) cyclohexane (XDI hydrogéné).

On peut utiliser un composant isocyanate contenant des fonctions urées. Ces fonctions urées améliorent certaines propriétés mécaniques de la couche. Le taux d'urée peut représenter jusqu'à environ 10 % du poids total du composant isocyanate à fonctions urées. De préférence le taux d'urée est compris entre 5 et 7 % du poids total dudit composant. Pour la raison invoquée précédemment on utilise de préférence du 3-isocyanatométhyl-3,5,5 triméthylcyclohexyldiisocyanate comportant des fonctions urées (IPDI et dérivés).

Les polyols longs convenables sont choisis parmi des polyétherdiols ou des polyesterdiols de masse moléculaire 500 - 4000 ; les polyesterdiols étant les produits d'estérification d'un diacide tel que l'acide adipique, succinique, palmitique, azelaïque, sébacique, ophtalique, et d'un diol tel un éthylèneglycol, propanediol -1,3, butanediol - 1,4, hexanediol- 1,6, les polyétherdiols de formule générale

$H \{ O (CH_2)_n \}_m OH$

avec n = 2 à 6 ; m tel que la masse moléculaire soit située dans l'intervalle 500-4000 ou les polyétherdiols de formule générale

$$H \left\{ O\overset{CH_3}{\overset{|}{C}}H - CH_2 \right\}_m OH$$

avec m tel que la masse moléculaire soit située également dans l'intervalle 500-4000. On peut encore utiliser des polycaprolactone-diols.

On utilise de préférence un polytétraméthylène glycol (n = 4) de masse moléculaire 1000.

Les agents d'allongement de chaines convenables sont des diols courts de masse moléculaire inférieure à environ 300 et de préférence inférieure à 150, tels que les : éthylèneglycol, propanediol-1,2, propanediol-1,3, butanediol-1,2, -1,3, -1,4, diméthyl-2,2 propanediol-1,3 (néopentylglycol), pentanediol-1,5, hexanediol-1,6, octanediol-1,8, décanediol-1,10, dodécanediol-1,12, cyclohexanediméthanol, bisphénol A, méthyl-2 pentanediol-2,4, méthyl-3 pentanediol- 2,4, éthyl- 2 hexanediol-1,3, triméthyl-2,2,4-pentanediol-1,3, diéthylèneglycol, triéthylèneglycol, tétraéthylèneglycol, butyne-2-diol-1,4,butènediol-1,4 et décynediol substitués et/ou éthérifiés, hydroquinone-bis-hydroxyéthyléther, bisphénol A éthérifiés par deux ou quatre groupes d'oxyde de propylène, acide diméthylolproponique. En général plus le diol est court plus la couche est dure.

On utilise de préférence le butanediol-1,4 qui est un bon compromis pour l'obtention d'une couche ni trop dure, ni trop souple, que l'on recherche pour ce type d'application en tant qu'absorbeur d'énergie.

Le composant polyol peut contenir une faible proportion d'au moins un polyol de fonctionnalité supérieure à deux et notamment des triols aliphatiques monomères tels le glycérol, le triméthylolpropane, des triols à chaines polyéther, des triols de polycaprolactone, la masse moléculaire de ces triols étant généralement comprise entre 90 et 1000, les polyols mixtes polyéther/polyester de fonctionnalité supérieure à 2, par exemple de fonctionnalité comprise entre 2 et 3. L'ajout d'un polyol de fonctionnalité supérieure à 2 provoque des liaisons de pontage supplémentaires entre les chaines du polyuréthane et peut ainsi encore améliorer la cohésion de la couche.

Les proportions entre le polyol long, le diol court et éventuellement le polyol de fonctionnalité supérieure à 2 peuvent varier selon les propriétés désirées. On choisit généralement des proportions telles que pour un équivalent hydroxyle le polyol long représente environ de 0,30 à 0,45 équivalent, le diol court d'environ 0,2 à 0,7 équivalent et le polyol de fonctionnalité supérieure à 2 environ 0 à 0,35 équivalent.

On peut encore réaliser la couche en remplaçant une partie du composant polyol par un produit à hydrogènes actifs différents tel une amine.

Suivant une réalisation de la couche de matière plastique, le composant isocyanate peut contenir dans des proportions limitées, par exemple inférieures à environ 15 % en équivalent NCO, au moins un triisocyanate tels un biuret d'isocyanate ou un triisocyanurate.

Comme décrit précédemment, avant de former la pellicule de revêtement acrylique sur le support de coulée, on revét celui-ci d'un agent de séparation. Un agent convenable est par exemple celui décrit dans la publication de brevet français 2 383 000 en tant qu'agent de séparation pour la fabrication d'une couche de polyuréthane sur un support en verre. Cet agent de séparation est un produit d'addition modifié d'éthylène oxyde.

De façon imprévue, cet agent se montre tout à fait adapté à la séparation du revêtement acrylique d'un support en verre.

D'autres avantages et caractéristiques de l'invention apparaitront dans la description suivante d'exemples de fabrication d'une couche de polyuréthane présentant des propriétés de surface améliorées.

EXEMPLE 1

Sur un support en verre mobile défilant de manière continue, revêtu d'un agent de séparation qui est un produit d'addition modifié d'éthylène oxyde, on dépose à l'aide d'un rouleau une solution de composition suivante :

- 1000 parties de diacrylate d'hexanediol
- 1500 parties d'acétone
- 25 parties d'azo-bis-isobutyronitrile en tant qu'amorceur pour la polymérisation par la chaleur des monomères acryliques.

On sèche à 60° pendant environ 2 minutes et on obtient une pellicule d'environ 2 microns d'épaisseur.

Pour fabriquer la couche de polyuréthane, on prépare au préalable le composant polyol en mélangeant un polytétraméthylèneglycol de masse moléculaire 1000 (par exemple le produit commercialisé sous l'appellation Polymeg 1000 par la société QUAKER OATS), avec du butanediol-1,4 et un polyol de fonctionalité supérieure à 2 (par exemple le produit commercialisé sous l'appellation Desmophen 1140 par la société BAYER), les proportions des constituants étant telles que le polytétraméthylèneglycol apporte 0,35 équivalent en groupes hydroxyles alors que le butanediol-1,4 en apporte 0,55 et que le polyol de fonctionalité supérieur à 2 en apporte 0,10.

Au composant polyol on incorpore un stabilisant à raison de 0,5 % en poids de la masse totale du composant polyol et du composant isocyanate, un agent nappant à raison de 0,05 % en poids calculé de la même façon et un catalyseur à savoir du dilaurate de dibutylétain à raison de 0,03 % en poids calculé de la même façon que précédemment.

Le composant isocyanate utilisé est du 3 isocyanatométhyl-3,5,5-triméthylcyclohexylisocyanate (IPDI) présentant des fonctions urées obtenues par hydrolyse partielle de l'IPDI et ayant une teneur en groupements NCO d'environ 31,5 % en poids.

Les composants sont pris en quantités telles que le rapport NCOp H est de 1.

Après dégazage sous vide des composants, le mélange porté à environ 40°C est coulé à l'aide d'une tête de coulée comme celle décrite dans la publication de brevet français 2 347 170, sur la pellicule acrylique formée précédemment. On forme ainsi une couche d'environ 0,70 mm d'épaisseur qui est soumis à un cycle de polymérisation consistant en 2 heures de chauffage à 120°C environ.

Au cours de ce cycle, se produit également la polymérisation du diacrylate d'hexanediol pour former un polymère acrylique interpénétré à la surface de la couche de polyuréthane.

On retire alors du support de coulée la feuille de matière plastique formée de la couche de polyuréthane et du revêtement acrylique.

La feuille peut être assemblée avec une feuille de verre recuite ou trempée pour former un vitrage de sécurité, l'assemblage s'effectuant en disposant la face de la couche de polyuréthane revêtue du revêtement acrylique à l'extérieur par rapport à la feuille de verre.

La feuille obtenue et le vitrage qui l'utilise sont soumis à des essais décrits par la suite.

EXEMPLE 2

On opère de la même façon que dans l'exemple 1 sauf qu'on remplace le diacrylate d'hexanediol par le diacrylate de butanediol dans la composition acrylique tout en conservant les mêmes proportions.

La feuille de matière plastique obtenue après polymérisation se détache aisément du support de coulée.

EXEMPLE 3

Sur un support en verre mobile défilant de manière continue, revêtu d'un agent de séparation qui est un produit d'addition modifié d'éthylène oxyde, on dépose à l'aide d'un rouleau une solution à 10 % dans de la méthyléthylcétone d'une résine méthacrylique (méthacrylate), présentant un indice d'hydroxyle $I_{OH}$ de 50 et un extrait sec de 60 % dans un mélange de 4 parties de xylène pour 1 partie d'acétate de butyle (résine méthacrylique commercialisée sous l'appellation DEGALAN VPLS 50 par la société allemande DEGUSSA), la solution déposée contenant à raison de 2,5 % en poids de l'extrait sec de la résine, de l'azo-bis-isobutynonitrile en tant qu'amorceur thermique.

On sèche à 120°C pendant 20 minutes et on obtient une pellicule d'environ 1 micron d'épaisseur.

On opère ensuite comme dans l'exemple 1 pour former la couche de polyuréthane sur la pellicule acrylique.

EXEMPLE 4

On opère comme dans l'exemple 3, sauf qu'on remplace la résine méthacrylique à indice d'hydroxyle $I_{OH}$ de 50 par une résine méthacrylique à indice d'hydroxyle $I_{OH}$ de 73.

EXEMPLES 5 A 8

On opère de la même façon que dans les exemples 1 à 4, sauf qu'on modifie le rapport entre les polyols du composant polyol en utilisant respectivement 0,35, 0,45 et 0,20 équivalent OH pour le polytétraméthylèneglycol, le butanediol-1,4, le polyol de fonctionalité supérieure à 2 étant un polycaprolactonetriol (par exemple le produit commercialisé sous l'appellation NIAX 301 par la société UNION CARBIDE).

EXEMPLES TEMOINS

EXEMPLE 9

On opère de la même façon que dans l'exemple 1, sauf qu'on forme sur le support de coulée, une pellicule acrylique d'une épaisseur de 20 μm.

EXEMPLE 10

On opère de la même façon que dans l'exemple 1 pour former la couche de polyuréthane sauf qu'on coule directement le mélange réactionnel des composants sur le support de coulée revêtu de l'agent de séparation, donc sans avoir formé au préalable une couche de revêtement acrylique.

Après polymérisation, la couche de polyuréthane est détachée du support et elle est assemblée avec une feuille de verre.

EXEMPLE 11

On opère de la même façon que dans l'exemple témoin 9 sauf que le vitrage obtenu est plongé dans un bain de composition identique à la composition acrylique déposée sur le support dans l'exemple 1.

La durée du trempage est de quelques secondes.

Après retrait du bain, le vitrage est séché à 60°C pendant 2 minutes puis l'ensemble est porté à 120°C durant 2 heures pour effectuer la polymérisation du revêtement acrylique.

EXEMPLE 12

On opère de la même façon que dans l'exemple 1 sauf qu'avant d'effectuer la coulée du mélange réactionnel sur la couche acrylique, on fait polymériser celle-ci en la portant à une température de 120°C pendant 2 heures.

Les couches de polyuréthanes obtenues d'après les exemples sont soumis à des tests d'abrasion.

Un des tests d'abrasion est un test d'usométrie utilisé généralement pour mesurer la résistance de papiers à l'usure.

On place un échantillon de 12 centimètres de diamètre obtenu selon les exemples sur un plateau tournant et on applique sur la face à tester de l'échantillon, c'est-à-dire la face traitée par le revêtement acrylique, un tissu en coton avec un poids d'appui de 1 kg. On fait effectué 1000 tours à l'échantillon. Celui-ci est alors retiré de l'appareil et on observe son état de surface et sa transparence.

Un autre test d'usométrie mettant en évidence la résistance à l'abrasion de la couche par les solvants consiste à imbiber l'échantillon par du cyclohexanone et à lui faire subir 500 tours comme dans le test précédent.

Les résultats de ces tests d'abrasion sont contenus dans le tableau suivant. L'aspect de l'échantillon est noté :

- bon : lorsque la transparence de l'échantillon n'a pas été affectée par le test ;
- moyen : lorsqu'on observe un léger trouble ;
- mauvais : lorsque l'échantillon est rayé et qu'il a perdu sa transparence.

| EXEMPLES | ASPECT DE L'ECHANTILLON APRES 1000 TOURS A SEC | ASPECT DE L'ECHANTILLON APRES 500 TOURS EN PRESENCE DE CYCLOHEXANONE |
|---|---|---|
| 1 | BON | MOYEN |
| 2 | BON | BON |
| 3 | BON | BON |
| 4 | BON | BON |
| 5 | BON | BON |
| 6 | BON | BON |
| 7 | BON | BON |
| 8 | BON | BON |
| 9 | MAUVAIS | MAUVAIS |
| 10 | BON | MOYEN |
| 11 | MAUVAIS | MAUVAIS |
| 12 | MAUVAIS | MAUVAIS |

Les résultats de ce test montrent que la couche de polyuréthane obtenue par coulée réactive sur un support préalablement revêtu par un revêtement acrylique de faible épaisseur, présente une très bonne résistance à l'abrasion.

Lorsque le revêtement est trop épais, la résistance à l'abrasion est au contraire diminuée par rapport à la résistance présentée par une couche non traitée.

Lorsque le revêtement est effectué par trempage de la couche de matière plastique déjà polymérisé dans un bain acrylique, une amélioration de la résistance à l'abrasion n'est pas observée, au contraire on observe une détérioration de la qualité optique.

La couche de polyuréthane selon l'invention, associée ou non à une ou plusieurs couches de matière plastique est avantageusement utilisée en tant que couche externe d'un vitrage feuilleté comprenant un support en verre ou en matière plastique, la face de la couche comportant le polymère acrylique étant orientée vers l'extérieur du vitrage.

## Revendications

1. Feuille en matière plastique transparente de haute qualité optique comprenant une couche de polyuréthane formée par dépôt par coulée ou pulvérisation réactive sur un support plan horizontal d'un mélange réactionnel comprenant un composant polyol et un composant isocyanate , caractérisée en ce que la face de la couche de polyuréthane qui était orientée vers le support, lors de la formation de la couche, comprend un polymère acrylique résultant de la mise en contact, au cours du dépôt du mélange réactionnel, de ce mélange réactionnel avec une couche mince acrylique déposée au préalable sur le support de formation.

2. Feuille selon la revendication 1, caractérisée en ce que le polymère acrylique et le polyuréthane de la partie superficielle de la couche de polyuréthane sont interpénétrés.

3. Feuille selon la revendication 1 ou 2, caractérisée en ce que le polymère acrylique constitue un revêtement mince pour la couche de polyuréthane.

4. Procédé pour la fabrication d'une feuille de matière plastique transparente de haute qualité optique comprenant une couche de polyuréthane obtenue par coulée ou pulvérisation réactive sur un support plan horizontal d'un mélange réactionnel comprenant un composant polyol et un composant isocyanate, la surface de la couche de polyuréthane au contact du support de coulée comportant un polymère acrylique caractérisé en ce qu'il comprend la suite d'opérations suivantes :
- on dépose sur le support de coulée un agent de séparation,
- on dépose sur l'agent de séparation des monomères, ou prépolymères acryliques ou des polymères acryliques porteurs de groupes hydroxyles libres afin de former un revêtement acrylique mince,
- on dépose par coulée ou pulvérisation sur le revêtement acrylique, le mélange réactionnel apte à former la couche de polyuréthane,
- on fait subir à l'ensemble un cycle de polymérisation,
- on retire la couche de polyuréthane formée associée au revêtement acrylique, du support de coulée.

5. Procédé selon la revendication 4, caractérisé en ce que les monomères, prépolymères ou polymères acryliques sont déposés sur l'agent de séparation, sous la forme d'une solution et qu'on évapore le solvant par séchage avant le dépôt du mélange réactionnel apte à former la couche de polyuréthane.

6. Procédé selon la revendication 5, caractérisé en ce que la solution contient un activateur de polymérisation pour les monomères ou prépolymères acryliques, ou pour les polymères acryliques porteurs de groupes hydroxyles libres.

7. Procédé selon une des revendications 4 à 6, caractérisé en ce que les polymères acryliques porteurs de groupes hydroxyles libres sont des résines méthacryliques à indice d'hydroxyles inférieur à 100.

8. Procédé selon une des revendications 1 à 7, caractérisé en ce que le revêtement acrylique formé sur le support de coulée à une épaisseur inférieure à 10 µm environ.

9. Procédé selon une des revendications 1 à 8, caractérisé en ce que le cycle de polymérisation est effectué à une température comprise entre 80 et 160°C.

10. Procédé selon la revendication 9, caractérisé en ce que le cycle de polymérisation consiste à porter l'ensemble à une température de 120°C environ pendant 2 heures environ.

11. Vitrage feuilleté comprenant un support monolithique ou feuilleté en verre ou en matière plastique caractérisé en ce qu'il utilise la feuille de matière plastique selon une des revendications 1 à 3, la face de la couche de polyuréthane, comportant le polymère acrylique étant orientée vers l'extérieur du vitrage.

## Patentansprüche

1. Transparente Kunststoffolie hoher optischer Qualität, umfassend eine Polyurethanschicht, die durch Aufbringen einer Reaktionsmischung, umfassend eine Polyolkomponente und eine Isocyanatkomponente, auf eine horizontale Trägerebene mittels Gießen oder Spritzen gebildet worden ist, dadurch gekennzeichnet, daß die Fläche der Polyurethanschicht, die bei der Bildung der Schicht dem Träger zugewandt war, aufgrund des Inberührungbringens der Reaktionsmischung während ihres Aufbringens mit einer dünnen Acrylschicht, die zuvor auf den Träger aufgebracht worden war, ein Acrylatpolymer umfaßt.

2. Folie nach Anspruch 1, dadurch gekennzeichnet, daß das Acrylpolymer und das Polyurethan des Oberflächenbereiches der Polyurethanschicht einander durchdringen.

3. Folie nach Anspruch 1 oder 2, dadurch gekennzeichnet, daß das Acrylpolymer einen dünnen Überzug für die Polyurethanschicht bildet.

4. Verfahren zum Herstellen einer transparenten Kunststoffolie hoher optischer Qualität, umfassend eine Polyurethanschicht, erhalten durch Gießen oder Spritzen einer Reaktionsmischung, umfassend eine Polyolkomponente und eine Isocyanatkomponente, auf eine horizontale Trägerebene, wobei die Oberfläche der Polyurethanschicht, die sich mit dem Träger in Kontakt befindet, ein Acrylpolymer umfaßt, dadurch gekennzeichnet, daß es die folgende Reihe von Stufen umfaßt:
– man bringt auf dem Gießträger ein Trennmittel auf,
– man bringt auf das Trennmittel Acrylmonomere oder -vorpolymere oder Acrylpolymere mit freien Hydroxylgruppen auf, um einen dünnen Acrylüberzug zu bilden,
– man bringt auf dem Acrylüberzug durch Gießen oder Spritzen die Reaktionsmischung auf, die

geeignet ist, die Polyurethanschicht zu bilden,
– man unterwirft das Ganze einem Polymerisationszyklus,
– man zieht die Polyurethanschicht, die mit dem Acrylüberzug verbunden ist, von dem Gießträger ab.

5. Verfahren nach Anspruch 4, dadurch gekennzeichnet, daß die Acrylmonomeren, -vorpolymeren oder -polymeren in Form einer Lösung auf das Trennmittel aufgebracht werden und das Lösungsmittel vor dem Auftragen der Reaktionsmischung, die zur Bildung der Polyurethanschicht geeignet ist, durch Trocknen verdampft wird.

6. Verfahren nach Anspruch 5, dadurch gekennzeichnet, daß die Lösung einen Polymerisationsaktivator für die Acrylmonomeren oder -vorpolymeren oder die Acrylpolymeren mit freien Hydroxylgruppen enthält.

7. Verfahren nach einem der Ansprüche 4 bis 6, dadurch gekennzeichnet, daß die Acrylpolymeren mit freien Hydroxylgruppen Methacrylharze mit einem Hydroxylindex von weniger als 100 sind.

8. Verfahren nach einem der Ansprüche 4 bis 7, dadurch gekennzeichnet, daß der auf dem Gießträger gebildete Acrylüberzug eine Dicke von weniger als etwa 10 µm hat.

9. Verfahren nach einem der Ansprüche 4 bis 7, dadurch gekennzeichnet, daß der Polymerisationszyklus bei einer Temperatur von 80 bis 160°C ausgeführt wird.

10. Verfahren nach Anspruch 9, dadurch gekennzeichnet, daß der Polymerisationszyklus darin besteht, daß man das Ganze während etwa 2 h auf eine Temperatur von etwa 120°C bringt.

11. Verbundglas, umfassend einen monolithischen oder aus Schichten bestehenden Träger aus Glas oder Kunststoff, dadurch gekennzeichnet, daß man eine Kunststoffolie nach einem der Ansprüche 1 bis 3 benutzt, wobei die Fläche der Polyurethanschicht, die das Acrylpolymer umfaßt, dem Äußeren des Glases zugewandt ist.

**Claims**

1. Transparent plastics material sheet having a high optical quality comprising a polyurethane layer formed by deposition by reactive spraying or pouring onto a planar horizontal support of a reaction mixture comprising a polyol component and an isocyanate component, characterized in that the face of the polyurethane layer which was oriented towards the support during the formation of the layer is constituted by an acrylic polymer resulting from the contacting, during the deposition of the reaction mixture, of the latter with an acrylic film deposited beforehand on the forming support.

2. Sheet according to claim 1, characterized in that the acrylic polymer and the polyurethane of the surface part of the polyurethane layer are interpenetrated.

3. Sheet according to claims 1 or 2, characterized in that the acrylic polymer constitutes a thin covering for the polyurethane layer.

4. Process for the production of a transparent plastics material sheet of high optical quality comprising a polyurethane layer obtained by reactive spraying or pouring onto a planar horizontal support of a reaction mixture comprising a polyol component and an isocyanate component, the surface of the polyuretane layer in contact with the pouring support being constituted by an acrylic polymer, characterized in that it comprises the following sequence of operations:

a separating agent is deposited on the pouring support, onto the separating agent are deposited monomers, or acrylic prepolymers or acrylic polymers carrying free hydroxyl groups in order to form a thin acrylic covering,

by pouring or spraying on the acrylic covering is deposited a reaction mixture able to form the polyurethane layer,

the entity undergoes a polymerization cycle,

the polyurethane layer formed associated with the acrylic covering is removed from the pouring support.

5. Process according to claim 4, characterized in that the monomers or acrylic polymers or prepolymers are deposited on the separating agent in the form of a solution and the solvent is evaporated by drying prior to the deposition of the reaction mixture able to form the polyurethane layer.

6. Process according to claim 5, characterized in that the solution contains a polymerization activator for the acrylic prepolymers or monomers, or for the acrylic polymers carrying free hydroxyl groups.

7. Process according to one of the claims 4 to 6, characterized in that the acrylic polymers carrying free hydroxyl groups are methacrylic resins with a hydroxyl index below 100.

8. Process according to one of the claims 1 to 7, characterized in that the acrylic covering formed on the pouring support is approximately 10 µm thick.

9. Process according to one of the claims 1 to 8, characterized in that the polymerization cycle is carried out at a temperature between 80 and 160°C.

10. Process according to claim 9, characterized in that the polymerization cycle consist of raising the entity to a temperature of approximately 120°C for approximately 2 hours.

11. Laminated glass plate comprising a laminated or monolithic support of glass or plastics material, characterized in that it uses the plastics material sheet according to one of the claims 1 to 3, the face of the polyurethane layer incorporating the acrylic polymer being oriented towards the outside of the glass plate.